# EUROPEAN PATENT SPECIFICATION

(11) **EP 1 810 803 B1**
(45) Date of publication and mention of the grant of the patent: **03.11.2010**
(21) Application number: 07001131.7
(22) Date of filing: 19.01.2007
(51) Int. Cl.: B27C 9/04, B23Q 1/01, B27M 3/18, B27M 1/08, B23Q 7/04

(54) **Machine for machining elements made of wood with automatic loading and unloading of said elements and method for loading said elements**
Maschine zur Bearbeitung von Holzelementen mit automatischer Ladung und Entladung dieser Elemente sowie Verfahren zum Laden dieser Elemente
Machine pour l'usinage d'éléments constitués de bois avec chargement et déchargement automatiques desdits éléments et procédé de chargement desdits éléments

(30) Priority: 20.01.2006 IT MO20060022
(43) Date of publication of application: 25.07.2007
(73) Proprietor: SCM Group S.p.A., 47900 Rimini (RN) (IT)
(72) Inventor: Grassi, Giancarlo, 47834 Montelfiore Conca (RN) (IT)
(74) Representative: Crugnola, Pietro

(56) References cited:
- EP-A- 1 688 227
- DE-A1- 19 846 819

## Description

The present invention relates to a machine for machining elements made of wood or similar material with automatic loading and unloading of said elements and a method for loading elements in this machine. In particular, the invention relates to an operating machine, such as for example a drilling machine or a milling machine, provided with means for loading and unloading respectively elements to be machined and already machined elements, for example, panels, wings, doors, profiles, etc.

In some operating machines the loading and unloading procedures of the elements are manual, and require operators for transferring said elements from movement devices to a working plane of the machine and vice versa. The movement devices consist of conveyor belts or of roller conveyors and supply the machine with elements to be machined and remove from the machine the already machined elements.

These known machines have the drawback of requiring the use of operators, i.e. entailing a limit to the production speed of the machine, high running costs and the risk of errors in the transferring and positioning of the elements.

Operating machines are known in which the loading and unloading procedures are automatic and performed by suitable removing and transferring means fixed to respective operating heads of the machines. The aforesaid operating heads that perform the different machinings on the elements, are, in fact, movable, of the type with controlled axes and can move in the space along two or more directions that are orthogonal to one another. In this way the transferring means, which is integral with the operating heads, is able to move for removing and/or depositing elements to be machined and/or already machined elements.

The drawback of these operating machines consists of the fact that during loading and unloading operations the operating heads cannot perform any machining as the operating heads move with the transferring means. This causes an interruption of the machining cycle of the machine and a consequent reduction of the productivity thereof.

Operating machines are furthermore known with which anthropomorphic robots or manipulators are associated that are able to move the elements in the loading and unloading operations. These manipulators are programmable in a versatile and flexible manner for performing in a fast and precise manner the aforesaid operations with elements of different sizes and shapes, but have the drawback of being very expensive and requiring separate control apparatuses that are generally not integrable with those of the operating machine.

In some operating machines the anthropomorphic robot is replaced by fixed-portal transferring means, for example a Cartesian manipulator, which loads and unloads the elements. This transferring means has to be placed alongside the operating machine, this entailing an increase in the overall dimensions and general dimensions of the machining centre consisting of the operating machine and of the auxiliary means/devices associated therewith.

Further, as this transferring means is physically separate from the operating machine and has a separate and autonomous controlling system, the transferring means does not enable the workpieces to be positioned precisely on the working plane of the machine. It is thus necessary to use suitable abutting elements fixed to said working plane that lock the element in a preset working position, set in the controlling means of the machine. As the dimensions and positioning of these abutments depend on the size of the workpiece, machinings on different elements require interruptions to the operating cycles to enable the aforesaid abutments to be adjusted and/or replaced.

DE 198 46 819 A1 discloses an operating machine for machining elements according to the preamble of claim 1.

An object of the present invention is to improve the known operating machines for machining elements made of wood or similar materials with automatic loading and unloading of said elements, in particular increasing the versatility and flexibility of use thereof.

Another object is to obtain a machine that is able to perform simultaneously loading and/or unloading procedures, respectively of elements to be machined and/or of already machined elements and/or operations on other elements.

Still another object is to obtain an operating machine provided with a simple structure, with contained dimensions and overall dimensions.

A further object is to obtain an operating machine and an operating method that enable elements of any shape and dimension to be positioned on a working plane in an in an automatic, simple, fast manner, and with great precision.

According to a first aspect of the invention there is provided a machine according to claim 1.

Owing to this aspect of the invention it is possible to obtain a machine for machining elements made of wood that is able to perform loading and/or unloading operations of elements to be machined and/or already machined elements and at the same time machinings on other elements, as the operating means and the transferring means are connected separately to the portal means. In particular, the operating means and the transferring means are connected to opposite sides of the portal means and do not therefore interfere with one another during operation. This further enables an operating machine to be made that is provided with a simple structure, with limited dimensions and overall dimensions.

Connecting the transferring means to the portal means of the machine also enables the elements to be positioned on the supporting means in an automatic manner and with great precision, the transferring means being controlled directly by controlling means of the machine.

In a second aspect of the invention there is provided a method for loading elements in a machine for machining elements made of wood or similar material comprising the following steps;
- positioning an element on movement means;
- driving said movement means for moving said element in a movement direction and making said element abut on first abutting means;
- moving said element along a first linear movement direction, in a removing position, wherein said element abuts on transferring means;
- storing said removal position in controlling means of said machine;
- locking said element in said removing position using said transferring means;
- transferring and depositing said element on supporting means in a preset releasing position.

Owing to this aspect of the invention it is possible to obtain a machine able to load in an automatic, simple and precise manner the elements to be machined, without the need for manual intervention by operators. The transferring means, as it is controlled directly by controlling means of the machine, is able to place and lock the elements on the movement means in a defined and precise position, for the subsequent transferring and releasing to the supporting means.

The invention can be better understood and carried into effect with reference to the attached drawings in which an embodiment of the invention is shown by way of non-limiting example, in which:
Figure 1 is a plan view of an operating machine for machining elements made of wood according to the invention;
Figure 2 is a frontal view of the machine in Figure 1;
Figure 3 is an enlarged, partial and schematic frontal view of transferring means and movement means of the machine in Figure 1;
Figure 4 is an isometric view of the machine in Figure 1;
Figure 5 is a plan view from above of a version of the machine in Figure 1;
Figure 6 is an enlarged, partial and schematic frontal view of transferring means and further movement means of the machine in Figure 5;
Figure 7 is a plan view of another version of the machine in Figure 1.

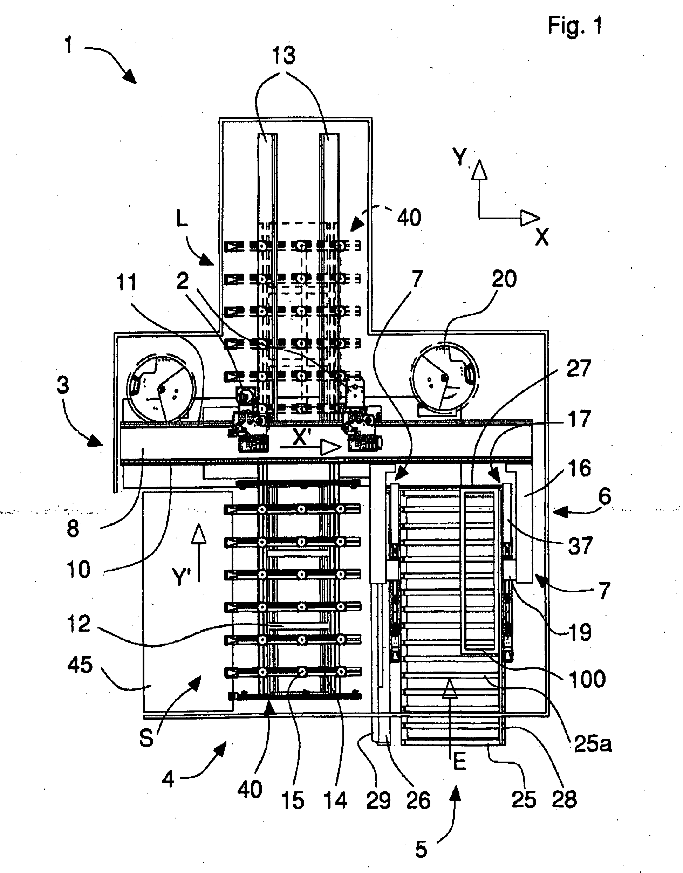

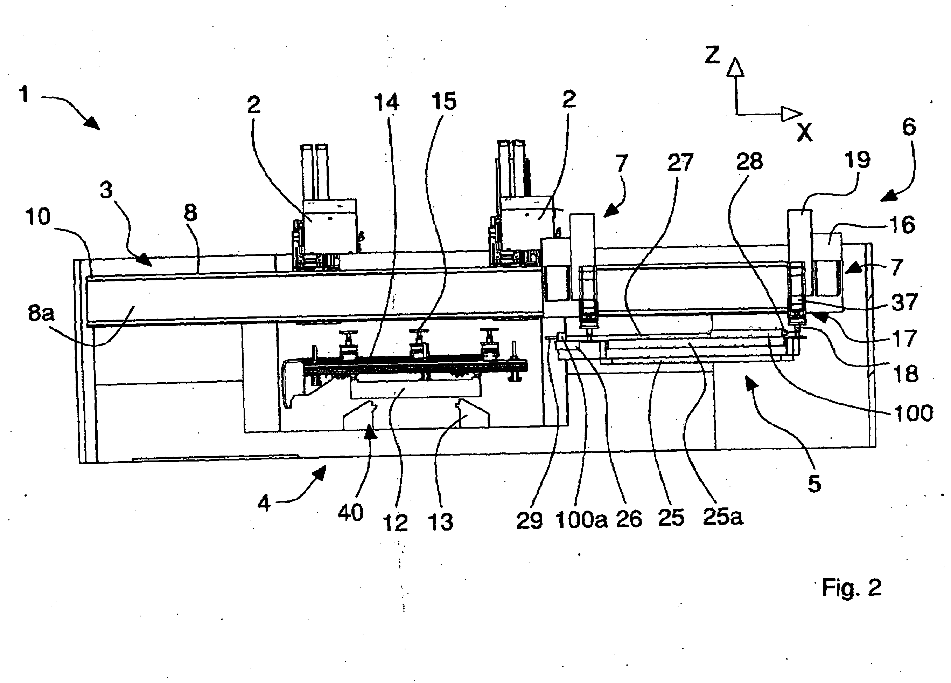

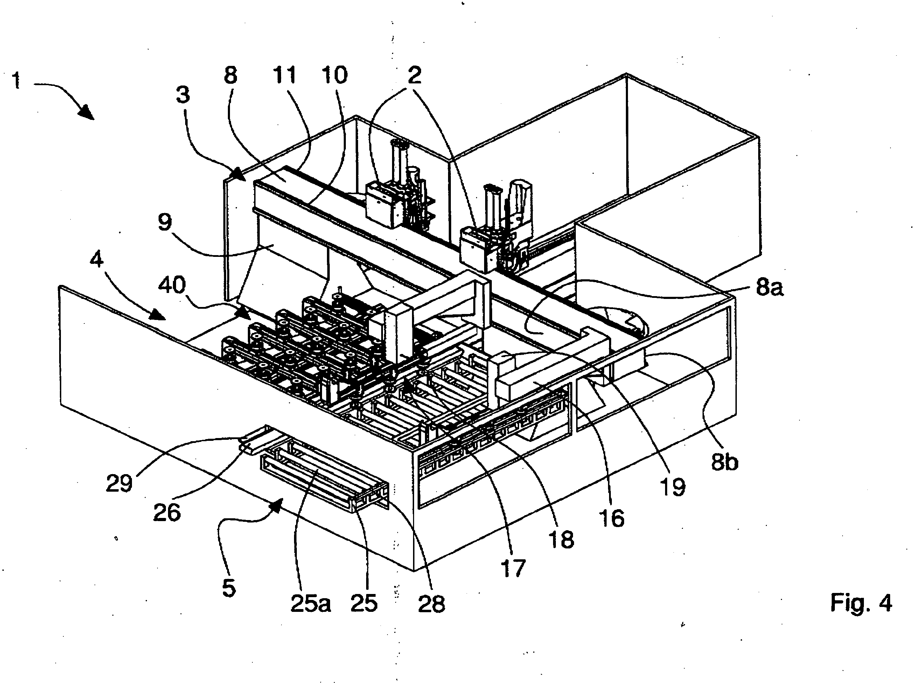

With reference to Figures 1 to 4, there is illustrated an operating machine 1 for machining elements 100, 100a made of wood or similar material comprising operating means 2 that is movable and suitable for performing a plurality of machinings and/or operations on said elements 100, 100a, portal means 3 configured for slidingly supporting said operating means 2, supporting means 4, suitable for sustaining and locking said elements at least during the performance of said machinings and/or operations, and transferring means 6; that is movable and suitable for positioning on said supporting means 4 and/or removing from said supporting means 4 the elements 100, 100a. This transferring means 6 is slidingly connected to the portal means 3.

The operating machine 1 further comprises movement means 5 for loading and introducing elements 100, 100a to be machined into said machine.

The portal means 3 of the operating machine 1 is of the fixed type, stiffly connected to the base of the machine 1 and having a longitudinal extent, having the shape, for example, of a monobloc with a single beam with a crosspiece 8 with an almost rectangular cross section, supported at the ends by two vertical uprights 9.

The transferring means 6 comprises one or more transferring arm means 7, each of which is cantilevered on the crosspiece 8, which is slidably connected to first guides 10 of the crosspiece 8 and is able to move along a first transverse linear movement direction X.

The first guides 10 are fixed, or directly made, on a first vertical side 8a of the crosspiece 8.

Each transferring arm 7 comprises respective gripping means 17 consisting of a removing bar 37 provided with a plurality of electrically or pneumatically operated gripping clamps 18, the position of which along said bar 37 can be adjusted according to the dimension and geometry of the elements 100, 100a to be moved. In particular, the gripping clamps 18, typically comprising a number between two and five, are slidable along said removing bar 37, driven independently along a third linear movement direction Y that is longitudinal and substantially orthogonal to the first linear movement direction X.

Each gripping clamp 18 comprises a fixed lower plate 18a and a movable upper plate 18b which is drivable, for example by a pneumatic cylinder, in such a way as to clamp an element 100, 100a against the fixed plate 18a, with a preset and adjustable compression force. The fixed plate 18a is connected to a fixed upper portion 18d of the clamp 18 by means of a reference stem 18c.

Alternatively, the gripping means 17 can include a plurality of suction cup means, of known type and which are not illustrated, which are able to grasp and lock the elements 100, 100a.

The transferring arm 7 comprises a supporting body 16, slidingly connected to said first guide means 10, and slide means 19, to which the gripping means 17 is fixed.

The slide means 19 is in turn slidingly connected to a free end of said supporting body 16 and is movable along a second linear movement direction Z, that is substantially vertical and substantially orthogonal to the first linear movement direction X and to the third linear movement direction Y.

These orthogonal linear movement directions X, Y, Z coincide with three orthogonal controlled linear movement axes, according to which the gripping means 17 of the transferring arm 7 can move in space.

In a version of the machine that is not illustrated, the gripping means 17 can be slidingly connected to the slide means 19 and possibly driven by a respective actuator.

In the embodiment illustrated in Figures 1 to 4, the transferring means 6 comprises a pair of transferring arm means 7, provided with respective gripping means 17 and able to operate jointly to grasp and move elements 100 that are complex and/or of significant dimensions, such as wings, doors, panels, tables and the like. In particular, the gripping means 17 of the two arms 7 are able to lock long, parallel and opposite sides of a panel or wing 100, for a firm and reliable grip.

In the case of single elements or workpieces 100a of modest dimensions, the use of the gripping means 17 of a single transferring arm 7 is sufficient.

In order to optimise the shifts of the gripping means 17 of the respective transferring arms 7 above the movement means 5, the slide means 19 is mounted on respective arms 7 that are opposite and facing one another.

The movement means 5 is arranged adjacent to and alongside the supporting means 4 and comprises a loading roller conveyor 25 provided with a plurality of driven rollers 25a that enable elements 100 of significant dimensions to be supported and moved, for example wings, doors, panels, tables and the like. The latter can be conveyed from an inserting zone of the roller conveyor 25, further from the machine 1, to the interior of the machine 1, at the transferring means 6, along a movement direction E that is longitudinal and substantially parallel to the third linear movement direction Y of the transferring means 6.

The driven rollers 25a are arranged parallel to one another and spaced at a distance that can be defined and/or adjusted according to the dimensions of the elements 100, in each case always greater than the overall dimensions of the clamps 18 to enable insertion thereof between two rollers, which is necessary for removing an element 100.

The movement means 5 further comprises a conveyor belt 26, wound in a closed loop around respective movement pulleys, and suitable for supporting and moving elements or workpieces 100a that are short or of reduced dimensions that could not be conveyed by the roller conveyor 25. The loading belt 26 is arranged alongside and parallel to said roller conveyor 25, interposed between the latter and the supporting means 4.

The combined use of a roller conveyor 25 and a belt 26 enables the operating machine 1 to be supplied with elements of very variable dimensions.

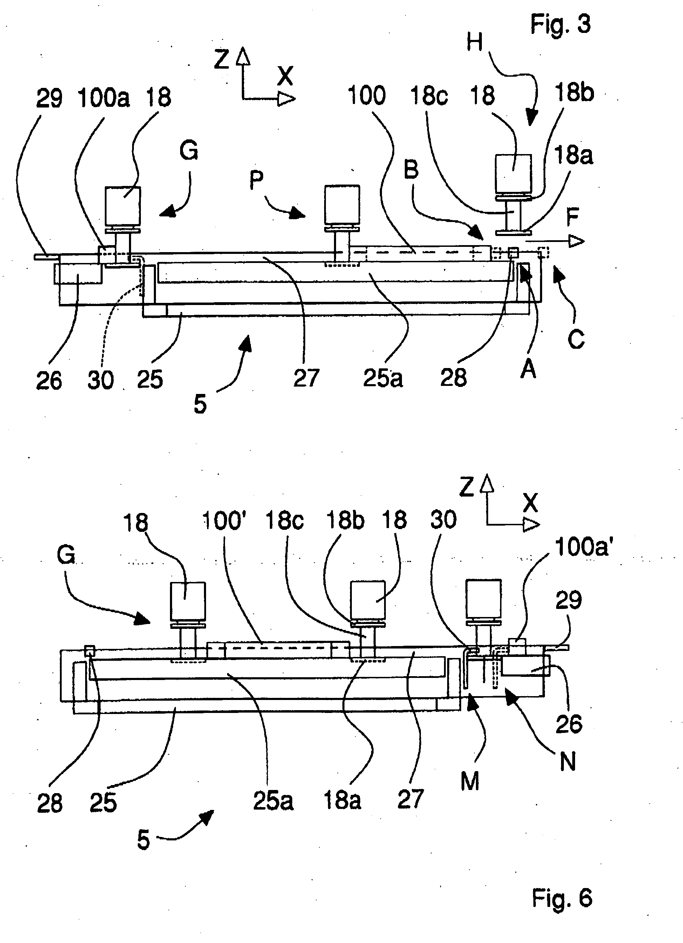

With reference to Figure 3, the movement means 5 comprises first abutting means 27 and second abutting means 28 suitable for cooperating with the transferring means 6 for positioning in a precise and defined way each element 100 on the movement means 5.

The first abutting means 27 fixed and arranged transversely, is intended for locking each element 100 moved by the rollers 25a or by the conveyor belt 26 in a precise and defined position along the movement direction E and, consequently, along the third linear movement direction Y of the transferring means 6.

The second abutting means 28 is arranged longitudinally for locking each element 100 moved by the gripping means 17 of a transferring arm means 7 along the first linear movement direction X. In other words, the second abutting means 28 in cooperation with the gripping means 17 enables each element 100 to be placed on the roller conveyor 25 in a precise and defined position, along said first linear movement direction X of the transferring means 6.

The second abutting means 28 is movable and substantially consists of a rectilinear longitudinal bar driven by first driving means, for example by pneumatic or electric means, in a rectilinear motion direction F that is substantially parallel to the first linear movement direction X of the transferring means.

During the introduction of the elements 100 into the roller conveyor 25 the second abutting means 28 is in a first reference position A, for guiding the elements 100 in the linear movement on the roller conveyor 25 according to the movement direction E.

In order to make the element 100 abut on the roller conveyor 25, the second abutting means 28 can be arranged in a second reference position B. In this position the second abutting means 28 is able to abut elastically on the elements 100, acting as a shock absorber to prevent possible damage to the element 100.

In order to enable the element 100 to be gripped by the gripping clamps 18 of a second transferring arm 7, the second abutting means 28 is moved in a linear manner to a third reference position C.

One or more sensors, of known type and which are not illustrated, can be provided for detecting the contact between the element 100 and the first abutting means 27 and generating a corresponding arresting signal for the movement means 2, in order to prevent the element sliding on the driven rollers 25a or on the conveyor belt 26.

Inserting means 29 is further provided that is movable and arranged for pushing a single element 100a, for example a strip, conveyed by the conveyor belt 26, inside one or more gripping clamps 18. More precisely, the inserting means 28 pushes the element 100 to abut on one or more reference stems 18c of respective gripping clamps 18.

The inserting means 29 comprises a respective elongated bar, driven by second driving means, for example of electric or pneumatic type.

The crosspiece 8 has second sliding guides 11 for slidingly supporting the operating means 2, which is thus movable according to a respective fourth linear movement direction X', substantially parallel to the first linear movement direction X of the transferring means 6.

The second guides 11 are fixed or made on a second vertical side 8b of the crosspiece 8, that is parallel to and opposite such first vertical side 8a.

The operating means 2 comprises one or more operating heads, of known type, with controlled axes and provided with respective spindle means for driving tool means in such a way as to perform a plurality of machinings on said elements 100, 100a. There are provided magazines 20 for enabling rapid automatic tool changing and ensuring maximum flexibility and rapidity of execution of the different machinings on the elements.

The operating heads can be, for example, anthropomorphic heads with controlled linear movement and rotation axes for performing complex movements and trajectories in space.

If two or more operating heads 2 are connected to the crosspiece 8, the operating heads 2 are movable independently to perform over the same time various machinings on one or more elements 100 present on the supporting means 4.

The supporting means 4 consists of a table or working plane 40 that is movable along a sliding direction Y' substantially parallel to the third linear movement direction Y of the transferring means 6 and orthogonal to the fourth linear movement direction X' of the operating means 2.

The working table 40 of known type and commonly called bar table or TVN plane, comprises a plurality of parallel and spaced supporting bars 14 fixed in an adjustable manner to a supporting frame 12 that is configured for moving in a linear manner along said sliding direction Y' on rails 13.

In particular, the working table 40 is moved by suitable electric or pneumatic actuators and can move in a linear manner between a loading/unloading position S, in which the working table 40 is adjacent to the movement means 5 for receiving an element 100, 100a to be machined or enabling a machined element 100', 100a' to be unloaded, and a working position L, in which such table 40 is adjacent to the operating means 2 to enable machinings to be performed on an element 100.

Each supporting bar 14 is provided with a plurality of suction cups 15 connected to a vacuum source for supporting and at the same time locking an element or workpiece to be machined. The suction cups 15 can move in a linear manner on the respective supporting bar 14 and be easily added or removed for specific locking of an element 100, 100a.

Alternatively, on the supporting bars 14 locking clamps for example pneumatic locking clamps, can be mounted that are of known type and are not illustrated in detail in the Figures.

The operating machine 1 comprises controlling means for the numerical control of the movement means 5, of the transferring means 6, of the supporting means 4 and of the operating means 2. To said controlling means sensor and user interface means are further connected for introducing data and communicating data to the operator.

In order to load or supply the operating machine 1, the elements 100, 100a to be machined are placed manually or automatically on the movement means 5, resting on the roller conveyor 25 or on the conveyor belt 26, according to the dimensions of the elements.

The movement means 5 is suitably driven for conveying each element 100 in the movement direction E, longitudinally guided by the second abutting means 28 until the element 100 abuts on the first abutting means 27, at the transferring means 6. The first abutting means 27 arrests the element 100 in a defined position known to the controlling means of the machine in such movement direction E.

If the element 100 is lying on the roller conveyor 25, the gripping means 17 of one of the two transferring arms 7 - typically the transferring arm 7 opposite and further from the second abutting means 28 - is moved for contacting and moving in a linear manner, if necessary, the element 100 until the element 100 abuts on the second abutting means 28, that is in the second reference position B.

The gripping means 17 of this first transferring arm 7 is moved along the first linear movement direction X.

During this operation the gripping clamps 18 of the gripping means 17 are in a first operating condition G, in which the respective fixed plates 18a are at a lower height than that of a resting surface of the roller conveyor 25, by a quantity comprised, for example, between 1 and 4 mm. In this way, it is the reference stems 18c of the gripping clamps 18 that abut on a longitudinal edge of the element 100.

The arrest of the gripping means 17 of the first transferring arm 7 is determined by a corresponding signal generated by suitable sensors detecting the contact of the element 100 with the second abutting means 28. Alternatively, the arrest position of the gripping means can be predefined and calculated according to the dimensions of the element 100 to be removed. In both cases, the pliability of the second abutting means 28 in the second reference position B enables possible imprecisions, tolerances and dimensional variations of each element 100 to be compensated.

At this point, the element 100 is placed on the roller conveyor 25 in a removing position P, defined in a precise manner both in the linear movement direction X of the first transferring arm 7 and in the movement direction E, parallel to the sliding direction Y' of the supporting means 4.

The removing position P of the element 100 is stored by the numerical controlling means of the machine 1.

In order to enable the gripping clamps 18 of the second transferring arm 7 to approach the element 100, the second abutting means 28 is moved in a linear manner to the third reference position C. The aforementioned gripping clamps that are in the first operating condition G, are moved near the element 100 without necessarily abutting on the element 100.

The gripping means 17 of both transferring arms 7 are thus moved vertically upwards, along the second linear movement direction Z of the transferring means 6, in a second operating condition H, in which said gripping means 17 raises the element 100 from the driven rollers 25a of the roller conveyor 25. In particular, the element 100 is supported by the fixed plates 18a of the respective gripping clamps 18, which, owing to the controlled axes in the direction Z of the transferring means 6, make a precise supporting plane that is necessary for locking said element 100 without the risk of deforming and/or damaging said element 100. The supporting surface of the roller conveyor 25, constituted by the generating lines of the various driven cylinders 25a, is not in fact perfectly planar and/or parallel to the linear movement directions X, Y of the transferring means, owing to clearances and imprecisions in the mounting and/or machining of said rollers.

The element 100 raised by the movement means 5 and locked by the gripping clamps 18 of the transferring arms 7 is then conveyed and deposited on the working table 40 of the supporting means 4 in a preset releasing position R. This position is perfectly known and determined, the position of the transferring means 6 along the first linear movement direction X being known and the position of the supporting means 4, along the sliding direction Y' being known. The working table 40, which is in the loading/unloading position S for receiving said element 100, is then moved in a linear manner to the working position L, for transferring said element 100 near the operating means 2 to enable the envisaged machinings to be performed.

If the element 100a is positioned on the conveyor belt 26, because of having a shape and/or dimensions that are incompatible with the roller conveyor 25, the gripping means 17 of a single transferring arm 7 is generally necessary for positioning and subsequently transferring said element 100.

The conveyor belt 26 moves the element 100 along the movement direction E until the element 100 contacts the first abutting means 27. At this point, the inserting means 29 pushes the element 100 in the first linear movement direction X until the element 100 abuts on two or more reference stems 18c of respective gripping clamps 18, the latter being in the first operating condition G. As the position of the element 100 is now defined with precision, the gripping clamps 18 can lock the element 100 and then transfer the element 100 to the supporting means 4.

In the embodiment of the operating machine 1 illustrated in Figures 1-4, the machined elements 100', 100a' are unloaded manually from the supporting means 4 by one or more operators who pick up and remove said elements.

The machine 1 can also comprise collecting means 45 configured for receiving one or more machined elements 100' that have to be removed and unloaded from the machine 1. Such collecting means 45 may comprise, for example, a carriage or a platform placed alongside the supporting means 4, on the side opposite the movement means 5.

The elements 100 can be transferred from the supporting plane 4 to the collecting means 45 manually by one or more operators, or automatically using the transferring means 6.

Alternatively, the movement means 5 can also be used for removing from the machine 1 elements 100', 100a' that have already been machined. In this case, the transferring means 6 in sequence grasps a machined element 100', 100a' associated with the supporting means 4, and transfers the machined element 100', 100a' to the movement means 5, depositing the machined element 100', 100a' on the roller conveyor 25 or on the loading belt 26 for subsequent removal thereof to the exterior of the machine 1.

In particular, the gripping clamps 18 of the respective transferring arms 7 pass between the driven rollers 25a of the roller conveyor 25, arranging in the first operating condition G, and in this way deposit said machined element 100' on said rollers 25a.

The movement means 5 can further comprise detaching means 30, that is movable and suitable for disengaged from one or more gripping clamps 18 said machined element 100a' to place such machined element 100a' on the conveyor belt 26.

The detaching means 30 includes a plurality of "L"-shaped brackets that are interconnected, aligned and equidistant.

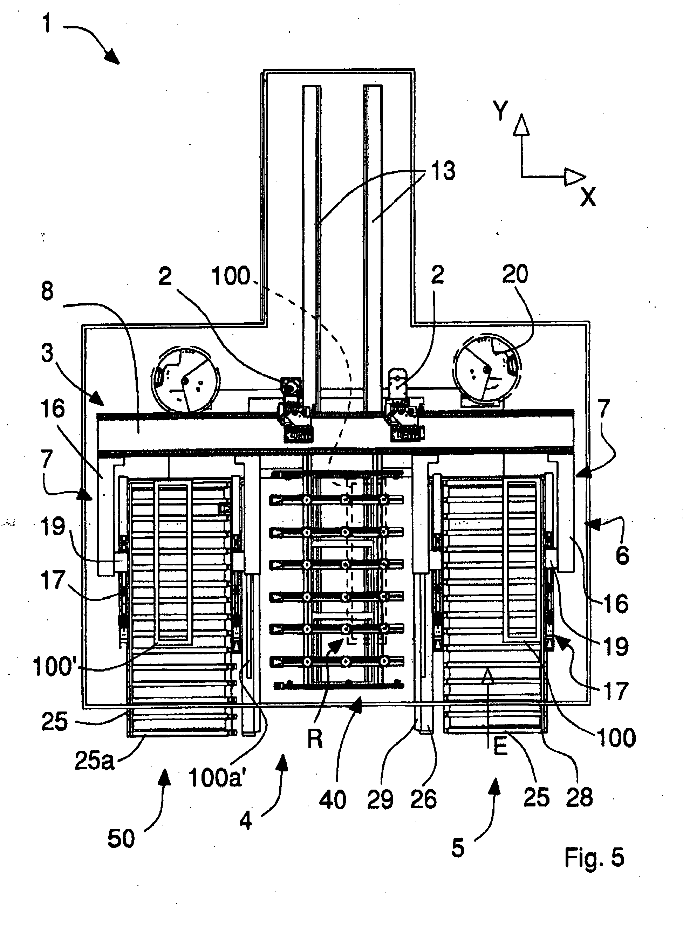

With reference to Figures 5 and 6, there is illustrated a version of the operating machine of the invention comprising further movement means 50 arranged adjacent to and next to the supporting means 4, of the opposite part with respect to the movement means 5.

Such further movement means 50 is substantially identical to the movement means 5, and comprises a roller conveyor 25, a conveying roller 26, abutting means 27, 28 and inserting means 29. The further movement means 50 are opposite the movement means 5, the working table 40 being interposed between the further movement means 50 and the movement means 5.

Whilst the movement means 5 is suitable for inserting or loading elements 100 to be machined in the machine 1, the further movement means 50 is intended for removing or unloading machined elements 100' from the machine 1.

The function of the movement means 5, 50 can be reversed, according to production needs and on the basis of the arrangement of the machine 1 in a productive system. In this case, the movement means 5 can unload the machined elements 100', 100a' whilst the further movement means 50 enables the operating machine 1 to be loaded and supplied with elements 100, 100a to be machined.

The transferring means 6 of this version of the operating machine 1 comprises two distinct pairs of transferring arm means 7, each pair being intended for removing and transferring respectively elements 100, 100a to be machined and machined elements 100', 100a'.

In this way, it is possible to optimise and increase machine 1 productivity with a "pendulum" management of the elements on the supporting means 4, on the basis of which whilst a machined element 100' is removed from the supporting means 4, another element 100 to be machined is deposited on the latter.

The further movement means 50 further comprises respective detaching means 30 suitable for disengaging from one or more gripping clamps 18 of a transferring arm 7 a machined element 100a' and then placing the machined element 100a' on the respective conveyor belt 26.

As shown in particular in Figure 6, the detaching means 30 is driven, for example with rectilinear motion along a movement direction parallel to the first linear movement direction X, between a disengaging position M in which the detaching means 30 is distant from said machined element 100', and an unloading position N, wherein such detaching means 30 places said machined element 100a' on the conveyor belt 26, after having disengaged such machined element 100a' from the gripping clamps 18.

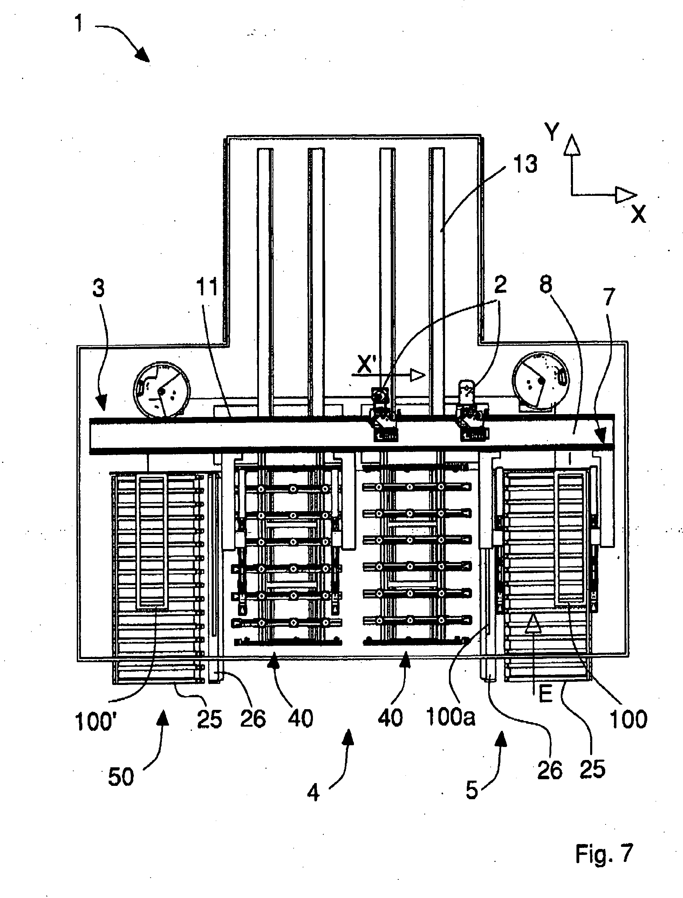

With reference to the Figure 7, there is illustrated a further version of the operating machine of the invention that is different from the preceding version, illustrated in Figures 5 and 6, owing to the fact that the supporting means 4 comprises two working tables 40, arranged alongside and parallel, and interposed between the movement means 5 and the further movement means 50.

The two tables 40 are moved in an independent manner and enable the production of the operating machine 1 to be increased considerably as, for example, the two tables 40 enable two elements 100 to be machined separately and simultaneously by means of the two operating heads 2.

Further, the two tables 40 enable an element 100, 100a to be machined and another element 100', 100a' to be loaded and unloaded with a so-called "pendulum" machining cycle.

## Claims

1. Operating machine for machining elements (100, 100a) made of wood or similar material comprising operating means (2) that is movable and arranged for performing a plurality of machinings on said elements (100, 100a), portal means (3) for slidingly supporting said operating means (2), supporting means (4) for sustaining said elements (100, 100a) at least during said machinings, transferring means (6) that is movable and arranged for positioning said elements (100, 100a) on and/or removing said elements (100, 100a) from said supporting means (4), and movement means (5) arranged adjacent to said supporting means (4) and suitable for supporting and moving said elements (100) for loading and/or unloading said elements (100) onto and off said machine (1), said transferring means (6) being slidingly connected to said portal means (3), said movement means (5) moving said elements (100) along a movement direction (E), **characterised in that** the machine comprises controlling means for the numerical control of at least said operating means (2), of said supporting means (4), of said transferring means (6) and of said movement means (5) and **in that** said movement means (5) comprises respective first abutting means (27) suitable for arresting the movement of said elements (100) in the movement direction (E) in a position known to said controlling means, said transferring means being controlled by said controlling means so as to be able to lock said elements in a defined position for the subsequent transferring to said supporting means.

2. Machine according to claim 1, wherein said portal means (3) is fixed and comprises a crosspiece (8) sustained by uprights (9).

3. Machine according to claim 2, wherein said crosspiece (8) comprises first guiding means (10) and second guiding means (11) for slidingly supporting respectively said transferring means (6) and said operating means (2).

4. Machine according to claim 3, wherein said first guiding means (10) and said second guiding means (11) are respectively associated with a first side (8a) and with a second side (8b) of said crosspiece (8), said sides (8a, 8b) being opposite and substantially parallel.

5. Machine according to claim 3 or 4, wherein said transferring means (6) comprises at least a transferring arm means (7) that is slidably fixed to said first guiding means (10) and is movable along a first linear movement direction (X).

6. Machine according to claim 5, wherein said transferring arm means (7) comprises gripping means (17) suitable for gripping an element (100).

7. Machine according to claim 5 or 6, wherein said transferring arm means (7) comprises a supporting body (16), slidingly connected to said first guiding means (10), and slide means (19), slidingly connected to said supporting body (16) and movable along a second linear movement direction (Z).

8. Machine according to claim 7, wherein said gripping means (17) is connected to said slide means (19).

9. Machine according to any one of claims 6 to 8, wherein said gripping means (17) comprises a plurality of gripping clamps (18) and/or of suction cup means.

10. Machine according to claim 9, wherein said gripping means (17) comprises a removing bar (37) suitable for slidingly supporting said gripping clamps (18) and/or suction cup means.

11. Machine according to claim 10, wherein said gripping means (17) comprises actuating means for moving said gripping clamps (18) and/or suction cup means on said removing bar (37).

12. Machine according to claim 10 or 11, wherein said gripping clamps (18) and/or suction cup means is movable along a third linear movement direction (Y).

13. Machine according to claim 12, as claim 9 is appended to claim 7 or 8, wherein said linear movement directions (X, Y, Z) are substantially orthogonal to one another.

14. Machine according to any one of claims 9 to 13, wherein each gripping clamp (18) comprises a fixed plate (18a), provided with a reference stem (18c), and a movable plate (18b) drivable for clamping an element (100) against said fixed plate (18a).

15. Machine according to claim 14, wherein each gripping clamp (18) comprises a driving means for moving said movable plate (18b).

16. Machine according to any one of claims 5 to 15, wherein said transferring means (6) comprises at least a pair of transferring arm means (7).

17. Machine according to any preceding claim, wherein said movement means (5) is alongside said supporting means (4).

18. Machine according to any preceding claim, comprising further movement means (50) arranged adjacent to said supporting means (4) and suitable for supporting and moving said elements (100) for loading and/or unloading said elements (100) onto and off said machine (1).

19. Machine according to claim 5, wherein said movement direction (E) is substantially orthogonal to said first linear movement direction (X) of the transferring means (6).

20. Machine according to any one of claims 18 to 19, wherein said supporting means (4) is interposed between said movement means (5) and said further movement means (50).

21. Machine according to any one of the preceding claims, wherein said movement means (5) comprises respective roller conveyor means (25) provided with driven rollers (25a).

22. Machine according to any one of the preceding claims, wherein said movement means (5) comprises respective conveyor belt means (26).

23. Machine according to claims 21 and 22, wherein said conveyor belt means (26) is adjacent and parallel to said respective roller conveyor means (25).

24. Machine according to claim 22 or 23, wherein said conveyor belt means (26) is interposed between said respective roller conveyor means (25) and said supporting means (4).

25. Machine according to any one of claims 18 and 20 to 24, as claims 20, 21 and 22 are appended to claim 18, wherein said further movement means (50) moves said elements (100) along a movement direction (E), and wherein said further movement means (50) comprises respective first abutting means (27), suitable for arresting the movement of said elements (100) in the movement direction (E).

26. Machine according to any one of the preceding claims, wherein said movement means (5) comprises respective second abutting means (28) suitable for abutting on said elements (100) transversely.

27. Machine according to claim 25 or to claim 26 as appended to claim 25, wherein said further movement means (50) comprises respective second abutting means (28) suitable for abutting on said elements (100) transversely.

28. Machine according to claim 26 or 27, wherein said second abutting means (28) is movable along a motion direction (F) that is substantially orthogonal to said movement direction (E).

29. Machine according to claim 28, wherein said movement means (5) comprises first driving means suitable for moving said second abutting means (28).

30. Machine according to any one of the preceding claims, wherein said movement means (5) comprises sensor means arranged for detecting the contact of said elements (100) with said first abutting means (27) in such a way as to generate a corresponding arresting signal for said movement means (5).

31. Machine according to any one of claims 22 to 30, as claims 25, 26 and 30 are appended to claim 22, wherein said movement means (5) comprises inserting means (29) that is movable and suitable for inserting an element (100) conveyed by said conveyor belt means (26) into gripping means (17) of a respective transferring arm means (7).

32. Machine according to claim 31, wherein said movement means (5) comprises second driving means suitable for moving said inserting means (29).

33. Machine according to any preceding claim, wherein said operating means (2) comprises at least an operating head with controlled axes, that is able to perform machinings on said elements (100).

34. Machine according to claims 3 and 33, wherein said operating head (2) is fixed to said second guiding means (11) and is movable along a fourth linear movement direction (X').

35. Machine according to claims 5 and 34, wherein said fourth linear movement direction (X') is substantially parallel to said first linear movement direction (X).

36. Machine according to any preceding claim, wherein said supporting means (4) comprises a working table (40) that is movable along a sliding direction (Y') between a loading/unloading position (S), wherein said working table (40) receives from and/or gives to said transferring means (6) said elements (100), and a working position (L), wherein said working table (40) is adjacent to the operating means (2) to enable the latter to perform machinings of said elements (100).

37. Machine according to claim 36, wherein said working table (40) is slidingly supported by rail means (13).

38. Machine according to claim 36 or 37, wherein said working table (40) comprises locking means (15) of said elements (100).

39. Machine according to claim 38, wherein said locking means (15) is adjustable in position and comprises a plurality of suction cup means and/or gripping clamps.

40. Method for loading elements (100) in a machine for machining elements (100) made of wood or similar material according to preceding claims, comprising the following steps:
- positioning an element (100) on movement means (5);
- driving said movement means (5) for moving said element (100) in a movement direction (E) and making said element (100) abut on first abutting means (27);
- moving said element (100) along a first linear movement direction (X), in a removing position (P), wherein said element (100) abuts on transferring means (6);
- storing said removal position (P) in controlling means of said machine (1);
- locking said element (100) in said removing position (P) using said transferring means (6);
- transferring and depositing said element (100) on supporting means (4) in a preset releasing position (R).

41. Method according to claim 40, wherein said moving said element (100) comprises driving transferring means (6) for moving said element (100) along said first linear movement direction (X) until said element (100) abuts on second abutting means (28) in said removing position (P).

42. Method according to claim 40, wherein said moving said element (100) comprises driving inserting means (29) for moving said element (100) along said first linear movement direction (X) until said element (100) abuts on transferring means (6) in said removing position (P).

## Patentansprüche

1. Werkzeugmaschine zum Bearbeiten von Elementen (100, 100a), die aus Holz oder einem ähnlichen Material gemacht sind, umfassend ein Betriebsmittel (2), das bewegbar ist und ausgelegt ist, eine Vielzahl von Bearbeitungen auf den Elementen (100, 100a) durchzuführen, ein Portalmittel (3), um gleitend das Betriebsmittel (2) zu lagern, ein Lagermittel (4) zum Halten der Elemente (100, 100a) wenigstens während der Bearbeitungen, ein Übertragungsmittel (6), das bewegbar ist und ausgelegt ist, um die Elemente (100, 100a) auf den Elementen (100) zu positionieren und/oder die Elemente (100, 100a) von dem Lagermittel (4) zu entfernen, und ein Bewegungsmittel (5), das benachbart zu dem Lagermittel (4) angeordnet sind und geeignet ist zum Lagern und Bewegen der Elemente (100) zum Laden und/oder Entladen der Elemente (100) auf und von der Maschine (1), wobei das Übertragungsmittei (6) gleitend mit dem Portalmittel (3) verbunden ist, wobei das Bewegungsmittel (5) die Elemente (100) entlang einer Bewegungsrichtung (E) bewegt, **dadurch gekennzeichnet, dass** die Maschine ein Steuermittel umfasst für die numerische Steuerung wenigstens des Betriebsmittels (2), des Lagermittels (4), des Übertragungsmittels (6) und des Bewegungsmittels (5) und dass das Bewegungsmittel (5) jeweilige erste Anstoßmittel (27) umfasst, die zum Arretieren der Bewegung der Elemente (100) in der Bewegungsrichtung (E) in einer dem Steuermittel bekannten Position geeignet sind, wobei das Übertragungsmittel von dem Steuermittel gesteuert wird, um in der Lage zu sein, die Elemente in einer definierten Position für das anschließende Übertragen zum Lagermittel zu sperren.

2. Maschine gemäß Anspruch 1, wobei das Portalmittel (3) fest ist und ein von Pfosten (9) gehaltenes Kreuzstück (8) umfasst.

3. Maschine gemäß Anspruch 2, wobei das Kreuzstück (8) ein erstes Führungsmittel (10) und ein zweites Führungsmittel (11) zum gleitenden Lagern des Übertragungsmittels (6) bzw. des Betriebsmittels (2) umfasst.

4. Maschine gemäß Anspruch 3, wobei das erste Führungsmittel (10) und das zweite Führungsmittel (11) einer ersten Seite (8a) bzw. einer zweiten Seite (8b) des Kreuzstücks (8) zugeordnet sind, wobei die Seiten (8a, 8b) gegenüberliegend und im Wesentlichen parallel sind.

5. Maschine gemäß Anspruch 3 oder 4, wobei das Übertragungsmittel (6) wenigstens ein Übertragungsarmmittel (7) umfasst, das gleitbar an dem ersten Führungsmittel (10) befestigt ist und entlang einer ersten linearen Bewegungsrichtung (X) bewegbar ist.

6. Maschine gemäß Anspruch 5, wobei das Übertragungsarmmittel (7) ein Greifmittel (17) umfasst, das zum Greifen eines Elements (100) geeignet ist.

7. Maschine gemäß Anspruch 5 oder 6, wobei das Übertragungsarmmittel (7) einen Lagerkörper (16) umfasst, der gleitend mit dem ersten Führungsmittel (10) verbunden ist, sowie ein Gleitmittel (19), das gleitend mit dem Lagerkörper (16) verbunden ist und entlang einer zweiten linearen Bewegungsrichtung (Z) bewegbar ist.

8. Maschine gemäß Anspruch 7, wobei das Greifmittel (17) mit dem Gleitmittel (19) verbunden ist.

9. Maschine gemäß einem der Ansprüche 6 bis 8, wobei das Greifmittel (17) eine Vielzahl von Greifklemmen (18) und/oder Saugnapfmitteln umfasst.

10. Maschine gemäß Anspruch 9, wobei das Greifmittel (17) einen Entfernbalken (37) umfasst, der geeignet ist zum gleitenden Lagern der Greifklemmen (18) und/oder Saugnapfmittel.

11. Maschine gemäß Anspruch 10, wobei das Greifmittel (17) Betätigungsmittel umfasst zum Bewegen der Greifklemmen (18) und/oder Saugnapfmittel auf dem Entfernbalken (37).

12. Maschine gemäß Anspruch 10 oder 11, wobei die Greifklemmen (18) und/oder Saugnapfmittel entlang einer dritten linearen Bewegungsrichtung (Y) bewegbar ist.

13. Maschine gemäß Anspruch 12, wenn Anspruch 9 an Anspruch 7 oder 8 angefügt ist, wobei die linearen Bewegungsrichtungen (X, Y, Z) im Wesentlichen senkrecht zueinander sind.

14. Maschine gemäß einem der Ansprüche 9 bis 13, wobei jede Greifklemme (18) eine feste Platte (18a) umfasst, die mit einer Referenzstange (18c) versehen ist, und eine bewegbare Platte (18b), die zum Klemmen eines Elements (100) gegen die feste Platte (18a) antreibbar ist.

15. Maschine gemäß Anspruch 14, wobei jede Greifklemme (18) ein Antriebsmittel zum Bewegen der bewegbaren Platte (18b) umfasst.

16. Maschine gemäß einem der Ansprüche 5 bis 15, wobei das Übertragungsmittel (6) wenigstens ein Paar von Übertragungsarmmitteln (7) umfasst.

17. Maschine gemäß einem der vorhergehenden Ansprüche, wobei sich das Bewegungsmittel (5) entlang des Lagermittels (4) befindet.

18. Maschine gemäß einem der vorhergehenden Ansprüche, umfassend ein weiteres Bewegungsmittel (50), das benachbart zum Lagermittel (4) angeordnet ist und geeignet ist zum Lagern und Bewegen der Elemente (100) zum Laden und/oder Entladen der Elemente (100) auf und von der Maschine (1).

19. Maschine gemäß Anspruch 5, wobei die Bewegungsrichtung (E) im Wesentlichen senkrecht zur ersten linearen Bewegungsrichtung (X) des Übertragungsmittels (6) ist.

20. Maschine gemäß einem der Ansprüche 18 bis 19, wobei das Lagermittel (4) zwischen das Bewegungsmittel (5) und das weitere Bewegungsmittel (50) gestellt ist.

21. Maschine gemäß einem der vorhergehenden Ansprüche, wobei das Bewegungsmittel (5) jeweilige Rollenfördermittel (25) umfasst, die mit angetriebenen Rollen (25a) versehen sind.

22. Maschine gemäß einem der vorhergehenden Ansprüche, wobei das Bewegungsmittel (5) jeweilige Förderbandmittel (26) umfasst.

23. Maschine gemäß Anspruch 21 und 22, wobei das Förderbandmittel (26) benachbart und parallel zum jeweiligen Rollenfördermittel (25) ist.

24. Maschine gemäß Anspruch 22 oder 23, wobei das Förderbandmittel (26) zwischen das jeweilige Rollenfördermittel (25) und das Lagermittel (4) gestellt ist.

25. Maschine gemäß einem der Ansprüche 18 und 20 bis 24, wenn Ansprüche 20, 21 und 22 an Anspruch 18 angefügt sind, wobei das weitere Bewegungsmittel (50) die Elemente (100) entlang einer Bewegungsrichtung (E) bewegt, und wobei das weitere Bewegungsmittel (50) jeweilige erste Anstoßmittel (27) umfasst, die geeignet sind zum Arretieren der Bewegung der Elemente (100) in der Bewegungsrichtung (E).

26. Maschine gemäß einem der vorhergehenden Ansprüche, wobei das Bewegungsmittel (5) jeweilige zweite Anstoßmittel (28) umfasst, die zum querseitigen Anstoßen an diesen Elemente (100) geeignet sind.

27. Maschine gemäß Anspruch 25 oder Anspruch 26, wenn er an Anspruch 25 angefügt ist, wobei das weitere Bewegungsmittel (50) jeweilige zweite Anstoßmittel (28) umfasst, die zum querseitigen Anstoßen an den Elementen (100) geeignet sind.

28. Maschine gemäß Anspruch 26 oder 27, wobei das zweite Anstoßmittel (28) entlang einer Bewegungsrichtung (F) bewegbar ist, die im Wesentlichen senkrecht zur Bewegungsrichtung (E) ist.

29. Maschine gemäß Anspruch 28, wobei das Bewegungsmittel (5) ein erstes Antriebsmittel umfasst, das zum Bewegen des zweiten Anstoßmittels (28) geeignet ist.

30. Maschine gemäß einem der vorhergehenden Ansprüche, wobei das Bewegungsmittel (5) ein Sensormittel umfasst, das zum Detektieren des Kontakts der Elemente (100) mit dem ersten Anstoßmittel (27) derart ausgelegt ist, um ein entsprechendes Arretiersignal für das Bewegungsmittel (5) zu erzeugen.

31. Maschine gemäß einem der Ansprüche 22 bis 30, wenn Ansprüche 25, 26 und 30 an Anspruch 22 angefügt sind, wobei das Bewegungsmittel (5) ein Einführmittel (29) umfasst, das bewegbar und geeignet ist zum Einführen eines Elements (100), das von dem Förderbandmittel (26) befördert wird, in Greifmittel (17) eines jeweiligen Übertragungsarmmittels (7).

32. Maschine gemäß Anspruch 31, wobei das Bewegungsmittel (5) ein zweites Antriebsmittel umfasst, das zum Bewegen des Einführmittels (29) geeignet ist.

33. Maschine gemäß einem der vorhergehenden Ansprüche, wobei das Betriebsmittel (2) wenigstens einen Betriebskopf mit gesteuerten Achsen umfasst, der in der Lage ist, Bearbeitungen auf den Elementen (100) durchzuführen.

34. Maschine gemäß Anspruch 3 und 33, wobei der Betriebskopf (2) an dem zweiten Führungsmittel (11) befestigt ist und entlang einer vierten linearen Bewegungsrichtung (X') bewegbar ist.

35. Maschine gemäß Ansprüchen 5 und 34, wobei die vierte lineare Bewegungsrichtung (X') im Wesentlichen parallel zur ersten linearen Bewegungsrichtung (X) ist.

36. Maschine gemäß einem der vorhergehenden Ansprüche, wobei das Lagermittel (4) einen Arbeitstisch (40) umfasst, der entlang einer Gleitrichtung (Y') zwischen einer Lade-/Entladeposition (S) bewegbar ist, wobei der Arbeitstisch (40) die Elemente (100) von dem Übertragungsmittel (6) aufnimmt oder sie an dieses abgibt, und einer Arbeitsposition (L), wobei der Arbeitstisch (40) benachbart zu dem Betriebsmittel (2) ist, um dem letztgenannten zu ermöglichen, Bearbeitungen der Elemente (100) durchzuführen.

37. Maschine gemäß Anspruch 36, wobei der Arbeitstisch (40) durch ein Schienenmittel (13) gleitend gelagert ist.

38. Maschine gemäß Anspruch 36 oder 37, wobei der Arbeitstisch (40) ein Sperrmittel (15) der Elemente (100) umfasst.

39. Maschine gemäß Anspruch 38, wobei das Sperrmittel (15) positionsmäßig einstellbar ist und eine Vielzahl von Saugnapfmitteln und/oder Greifklemmen umfasst.

40. Verfahren zum Laden von Elementen (100) in einer Maschine zum Bearbeiten von Elementen (100), die aus Holz oder einem ähnlichen Material gemacht sind, gemäß vorhergehenden Ansprüchen, umfassend die folgenden Schritte:
- Positionieren eines Elements (100) auf einem Bewegungsmittel (5);
- Antreiben des Bewegungsmittels (5) zum Bewegen des Elements (100) in einer Bewegungsrichtung (E) und Anstoßen lassen des Elements (100) an einem ersten Anstoßmittel (27);
- Bewegen des Elements (100) entlang einer ersten linearen Bewegungsrichtung (X) in einer Entfernposition (P), wobei das Element (100) an einem Übertragungsmittel (6) anstößt;
- Speichern der Entfernposition (P) in einem Steuermittel der Maschine (1);
- Sperren des Elements (100) in der Entfernposition (P) unter Verwendung des Übertragungsmittels (6);
- Übertragen und Ablegen des Elements (100) auf einem Lagermittel (4) in einer vorgegebenen Freigabeposition (R).

41. Verfahren gemäß Anspruch 40, wobei das Bewegen des Elements (100) ein Antreiben des Übertragungsmittels (6) zum Bewegen des Elements (100) entlang der ersten linearen Bewegungsrichtung (X) umfasst, bis das Element (100) an dem zweiten Anstoßmittel (28) in der Entfernposition (P) anstößt.

42. Verfahren gemäß Anspruch 40, wobei das Bewegen des Elements (100) ein Antreiben eines Einführmittels (29) zum Bewegen des Elements (100) entlang der ersten linearen Bewegungsrichtung (X) umfasst, bis das Element (100) an dem Übertragungsmittel (6) in der Entfernposition (P) anstößt.

## Revendications

1. Machine-outil pour l'usinage d'éléments (100, 100a) faits de bois ou d'un matériau similaire comprenant des moyens opérationnels (2) qui sont mobiles et prévus pour effectuer une pluralité d'usinages sur lesdits éléments (100, 100a), des moyens de portique (3) destinés à supporter de manière coulissante lesdits moyens opérationnels (2), des moyens de support (4) destinés à soutenir lesdits éléments (100, 100a) au moins pendant lesdits usinages, des moyens de transfert (6) qui sont mobiles et agencés pour le positionnement desdits éléments (100, 100a) et/ou le retrait desdits éléments (100, 100a) sur lesdits/desdits moyens de support (4), et des moyens de déplacement (5) placés adjacents auxdits moyens de support (4) et aptes à supporter et déplacer lesdits éléments (100) pour charger et/ou décharger lesdits éléments (100) sur et de ladite machine (1), lesdits moyens de transfert (6) étant reliés de manière coulissante auxdits moyens de portique (3), lesdits moyens de déplacement (5) déplaçant lesdits éléments (100) dans une direction (E) de déplacement, ***caractérisée en ce que*** la machine comprend des moyens de commande pour la commande numérique d'au moins lesdits moyens opérationnels (2), desdits moyens de support (4), desdits moyens de transfert (6) et desdits moyens de déplacement (5), et ***en ce que*** lesdits moyens de déplacement (5) comprennent des premiers moyens de butée respectifs (27) aptes à arrêter le déplacement desdits éléments (100) dans la direction (E) de déplacement dans une position connue desdits moyens de commande, lesdits moyens de transfert étant commandés par lesdits moyens de commande de façon à pouvoir bloquer lesdits éléments dans une position définie pour leur transfert à venir auxdits moyens de support.

2. Machine selon la revendication 1, dans laquelle lesdits moyens de portique (3) sont fixes et comprennent une traverse (8) soutenue par des montants (9).

3. Machine selon la revendication 2, dans laquelle ladite traverse (8) comprend des premiers moyens de guidage (10) et des deuxièmes moyens de guidage (11) pour supporter respectivement de manière coulissante lesdits moyens de transfert (6) et lesdits moyens opérationnels (2).

4. Machine selon la revendication 3, dans laquelle lesdits premiers moyens de guidage (10) et lesdits deuxièmes moyens de guidage (11) sont respectivement associés à un premier côté (8a) et à un deuxième côté (8b) de ladite traverse (8), lesdits côtés (8a, 8b) étant opposés et sensiblement parallèles.

5. Machine selon la revendication 3 ou 4, dans laquelle lesdits moyens de transfert (6) comprennent au moins un moyen de bras (7) de transfert qui est fixé de manière coulissante auxdits premiers moyens de guidage (10) et est mobile dans une première direction (X) de déplacement linéaire.

6. Machine selon la revendication 5, dans laquelle ledit moyen de bras (7) de transfert comprend des moyens de préhension (17) aptes à la préhension d'un élément (100).

7. Machine selon la revendication 5 ou 6, dans laquelle lesdits moyens de bras de transfert (7) comprennent un corps de support (16), relié de manière coulissante auxdits premiers moyens de guidage (10), et des moyens de coulisse (19), reliés de manière coulissante audit corps de support (16) et mobiles dans une deuxième direction (Z) de déplacement linéaire.

8. Machine selon la revendication 7, dans laquelle lesdits moyens de préhension (17) sont reliés auxdits moyens de coulisse (19).

9. Machine selon l'une quelconque des revendications 6 à 8, dans laquelle lesdits moyens de préhension (17) comprennent une pluralité de pinces de serrage (18) et/ou de moyens de ventouse.

10. Machine selon la revendication 9, dans laquelle lesdits moyens de préhension (17) comprennent une barre de retrait (37) apte à supporter de manière coulissante lesdites pinces de serrage (18) et/ou lesdits moyens de ventouse.

11. Machine selon la revendication 10, dans laquelle lesdits moyens de préhension (17) comprennent des moyens d'actionnement pour déplacer lesdites pinces de serrage (18) et/ou lesdits moyens de ventouse sur ladite barre de retrait (37).

12. Machine selon la revendication 10 ou 11, dans laquelle lesdites pinces de serrage (18) et/ou lesdits moyens de ventouse sont mobiles dans une troisième direction (Y) de déplacement linéaire.

13. Machine selon la revendication 12, lorsque la revendication 9 est dépendante de la revendication 7 ou 8, dans laquelle lesdites directions (X, Y, Z) de déplacement linéaire sont sensiblement orthogonales entre elles.

14. Machine selon l'une quelconque des revendications 9 à 13, dans laquelle chaque pince de serrage (18) comprend une plaque fixe (18a), munie d'une tige de référence (18c), et une plaque mobile (18b) pouvant être entraînée pour serrer un élément (100) contre ladite plaque fixe (18a).

15. Machine selon la revendication 14, dans laquelle chaque pince de serrage (18) comprend un moyen d'entraînement pour déplacer ladite plaque mobile (18b).

16. Machine selon l'une quelconque des revendications 5 à 15, dans laquelle lesdits moyens de transfert (6) comprennent au moins une paire de moyens de bras de transfert (7).

17. Machine selon l'une quelconque des revendications précédentes, dans laquelle lesdits moyens de déplacement (5) se trouvent le long desdits moyens de support (4).

18. Machine selon l'une quelconque des revendications précédentes, comprenant d'autres moyens de déplacement (50) placés adjacents auxdits moyens de support (4) et aptes à supporter et déplacer lesdits éléments (100) pour charger et/ou décharger lesdits éléments (100) sur et de ladite machine (1).

19. Machine selon la revendication 5, dans laquelle ladite direction (E) de déplacement est sensiblement orthogonale à ladite première direction (X) de déplacement linéaire des moyens de transfert (6).

20. Machine selon l'une quelconque des revendications 18 à 19, dans laquelle lesdits moyens de support (4) sont interposés entre lesdits moyens de déplacement (5) et lesdits autres moyens de déplacement (50).

21. Machine selon l'une quelconque des revendications précédentes, dans laquelle lesdits moyens de déplacement (5) comprennent des moyens respectifs (25) de transporteur à rouleaux munis de rouleaux commandés (25a).

22. Machine selon l'une quelconque des revendications précédentes, dans laquelle lesdits moyens de déplacement (5) comprennent des moyens respectifs (26) de bande transporteuse.

23. Machine selon les revendications 21 et 22, dans laquelle lesdits moyens (26) de bande transporteuse sont adjacents et parallèles auxdits moyens (25) de transporteur à rouleaux respectifs.

24. Machine selon la revendication 22 ou 23, dans laquelle lesdits moyens (26) de bande transporteuse sont interposés entre lesdits moyens (25) de transporteur à rouleaux respectifs et lesdits moyens de support (4).

25. Machine selon l'une quelconque des revendications 18 et 20 à 24, lorsque les revendications 20, 21 et 22 sont dépendantes de la revendication 18, dans laquelle lesdits autres moyens de déplacement (50) déplacent lesdits éléments (100) dans une direction (E) de déplacement, et dans laquelle lesdits autres moyens de déplacement (50) comprennent des premiers moyens de butée respectifs (27), aptes à arrêter le déplacement desdits éléments (100) dans la direction (E) de déplacement.

26. Machine selon l'une quelconque des revendications précédentes, dans laquelle lesdits moyens de déplacement (5) comprennent des deuxièmes moyens de butée respectifs (28) aptes à s'abouter transversalement sur lesdits éléments (100).

27. Machine selon la revendication 25 ou la revendication 26 lorsqu'elle est dépendante de la revendication 25, dans laquelle lesdits autres moyens de déplacement (50) comprennent des deuxièmes moyens de butée respectifs (28) aptes à s'abouter transversalement sur lesdits éléments (100).

28. Machine selon la revendication 26 ou 27, dans laquelle lesdits deuxièmes moyens de butée (28) sont mobiles le long d'une direction (F) de déplacement qui est sensiblement orthogonale à ladite direction (E) de déplacement.

29. Machine selon la revendication 28, dans laquelle lesdits moyens de déplacement (5) comprennent des premiers moyens d'entraînement aptes à déplacer lesdits deuxièmes moyens de butée (28).

30. Machine selon l'une quelconque des revendications précédentes, dans laquelle lesdits moyens de déplacement (5) comprennent des moyens de capteur prévus pour détecter le contact desdits éléments (100) avec lesdits premiers moyens de butée (27) de manière à générer un signal d'arrêt correspondant pour lesdits moyens de déplacement (5).

31. Machine selon l'une quelconque des revendications 22 à 30, lorsque les revendications 25, 26 et 30 sont dépendantes de la revendication 22, dans laquelle lesdits moyens de déplacement (5) comprennent des moyens d'insertion (29) qui sont mobiles et aptes à insérer un élément (100) transporté par lesdits moyens de bande transporteuse (26) dans lesdits moyens de préhension (17) d'un moyen de bras de transfert respectif (7).

32. Machine selon la revendication 31, dans laquelle lesdits moyens de déplacement (5) comprennent des deuxièmes moyens d'entraînement aptes à déplacer lesdits moyens d'insertion (29).

33. Machine selon l'une quelconque des revendications précédentes, dans laquelle lesdits moyens opérationnels (2) comprennent au moins une tête d'actionnement avec des axes contrôlés qui est apte à réaliser des usinages sur lesdits éléments (100).

34. Machine selon les revendications 3 et 33, dans laquelle ladite tête d'actionnement (2) est fixée auxdits deuxièmes moyens de guidage (11) et est mobile le long d'une quatrième direction (X') de déplacement linéaire.

35. Machine selon les revendications 5 et 34, dans laquelle ladite quatrième direction (X') de déplacement linéaire est sensiblement parallèle à ladite première direction (X) de déplacement linéaire.

36. Machine selon l'une quelconque des revendications précédentes, dans laquelle lesdits moyens de support (4) comprennent une table de travail (40) qui est mobile le long d'une direction de coulissement (Y') entre une position de chargement/déchargement (S), dans laquelle ladite table de travail (40) reçoit des et/ou donne aux dits moyens de transfert (6) lesdits éléments (100) de travail, et une position de travail (L) dans laquelle ladite table de travail (40) est adjacente aux moyens opérationnels (2) pour permettre à ces derniers de réaliser les usinages desdits éléments (100).

37. Machine selon la revendication 36, dans laquelle ladite table de travail (40) est supportée de manière coulissante par des moyens de rail (13).

38. Machine selon la revendication 36 ou 37, dans laquelle ladite table de travail (40) comprend des moyens de verrouillage (15) desdits éléments (100).

39. Machine selon la revendication 38, dans laquelle lesdits moyens de verrouillage (15) sont réglables en position et comprennent une pluralité de moyens de ventouse et/ou de moyens de pinces de serrage.

40. Procédé de chargement d'éléments (100) dans une machine pour l'usinage d'éléments (100) faits de bois ou matériau similaire selon les revendications précédentes, comprenant les étapes suivantes :
- positionnement d'un élément (100) sur des moyens de déplacement (5) ;
- entraînement desdits moyens de déplacement (5) pour déplacer ledit élément (100) dans une direction (E) de déplacement et faire s'abouter ledit élément (100) sur des premiers moyens de butée (27) ;
- déplacer ledit élément (100) dans une première direction (X) de déplacement linéaire jusqu'à une position d'enlèvement (P) dans laquelle ledit élément (100) s'aboute sur les moyens de transfert (6) ;
- stocker ladite position d'enlèvement (P) dans des moyens de commande de ladite machine (1) ;
- bloquer ledit élément (100) dans ladite position d'enlèvement (P) en utilisant lesdits moyens de transfert (6) ;
- transférer et déposer ledit élément (100) sur des moyens de support (4) dans une position de libération préréglée (R).

41. Procédé selon la revendication 40, dans lequel ledit déplacement dudit élément (100) comprend l'entraînement de moyens de transfert (6) pour déplacer ledit élément (100) le long de ladite première direction (X) de déplacement linéaire jusqu'à ce que ledit élément (100) s'aboute sur des deuxièmes moyens de butée (28) dans ladite position d'enlèvement (P).

42. Procédé selon la revendication 40, dans lequel ledit enlèvement dudit élément (100) comprend l'entraînement de moyens d'insertion (29) pour déplacer ledit élément (100) dans ladite première direction (X) de déplacement linéaire jusqu'à ce que ledit élément (100) s'aboute sur les moyens de transfert (6) dans ladite position d'enlèvement (P).
